# EUROPEAN PATENT APPLICATION

(11) **EP 4 571 940 A1**
(43) Date of publication of application: **18.06.2025**
(21) Application number: 23918180.3
(22) Date of filing: 06.09.2023
(51) Int. Cl.: H01M 10/613, H01M 10/6568, H01M 10/6557, H01M 10/6555, H01M 50/258

(54) **INTEGRATED BATTERY MODULE**

(30) Priority: 29.01.2023 CN 202310070531; 29.01.2023 CN 202320135458 U
(71) Applicant: Eve Energy Co., Ltd., Huizhou, Guangdong 516006 (CN)
(72) Inventor: HUANG, Weicai, Huizhou, Guangdong 516006 (CN)
(74) Representative: Herrero & Asociados, S.L.
(86) International application number: PCT/CN2023/117288
(87) International publication number: WO 2024/156179

(57) **Abstract**

The present disclosure discloses an integrated battery module, which includes a box, a liquid cooling assembly and cells. The box includes a frame and a bottom supporting plate structure. The bottom supporting plate structure is provided with at least one pressure relief channel and at least one liquid cooling channel. The pressure relief channel is in communication with an explosion-proof valve via a cavity of the frame. The liquid cooling channel is in communication with a liquid cooling flow channel of a liquid cooling plate.

## Description

The present disclosure claims priority to Chinese Patent Application No. 2023100705317 filed on January 9, 2023 with the Chinese Patent Office, and Chinese Patent Application No. 2023201354582 filed on January 9, 2023 with the Chinese Patent Office, the disclosures of which are incorporated herein by reference in their entireties.

### TECHNICAL FIELD

The present disclosure relates to the technical field of battery thermal management, and in particular, to an integrated battery module.

### BACKGROUND

With economic development and continuous improvement of new energy technologies, electrochemical energy storage products are increasingly mature in the market, and battery modules are one of the electrochemical energy storage products.

In consideration of factors such as weight reduction design, a bottom guard plate and a cell tray of traditional battery modules are usually formed by processing thin plates. A pressure relief channel is formed between the two for discharging flames and combustible gases to achieve a safety protection effect when thermal runaway occurs. At the same time, a liquid cooling system is also arranged inside a box of a battery pack. Such a structure design manner has the following technical defects and disadvantages:
1, due to insufficient strength of the bottom guard plate, during the use of the battery module (for example, during the running of a vehicle), a phenomenon that the bottom guard plate hits the bottom of the battery module easily occurs, and the bottom guard plate is difficult to satisfy test requirements such as bottom compression, ball impact, and stone impact;
2, the cell tray of the battery module needs to be molded by means of stamping or die casting processes, and a sealing design is also required between the cell tray and the bottom guard plate to ensure the sealing performance of the pressure relief channel, resulting in high production costs and prone to problems such as poor sealing effect;
3, liquid cooling pipelines in the battery module occupy too much space in the box, resulting in insufficient design space.

Therefore, there is an urgent need in related technologies to apply for a battery module with high structural strength, good sealing performance, and an ability to save installation space.

### TECHNICAL ISSUES

The present disclosure provides an integrated battery module, which has characteristics of simple and reasonable structural design, high structural strength, good sealing performance, and an ability to save installation space.

### SUMMARY

In a first aspect, the present disclosure provides an integrated battery module, which includes:
a box including a frame and a bottom support plate structure; where the bottom support plate structure is fixedly mounted on one side of the frame; the frame is provided with an explosion-proof valve on its outer peripheral side; the frame is internally provided with a cavity communicating with the explosion-proof valve; the bottom support plate structure is provided with at least one pressure relief channel and at least one liquid-cooled channel, where the pressure relief channel is in communication with the explosion-proof valve via the cavity;
a liquid cooling assembly including a liquid cooling plate, where the liquid cooling plate is arranged in an receiving space enclosed by the frame and the bottom supporting plate structure; the liquid cooling plate is internally provided with at least one liquid cooling flow channel, where the liquid cooling flow channel is in communication with the liquid cooling channel; and
cells, wherein the number of the cells is multiple, and the plurality of cells are arranged at intervals in the receiving space.

### Beneficial effects

In the integrated battery module provided by the present disclosure, the bottom support plate structure is provided on one side of a frame, the bottom support plate structure is provided with at least one pressure relief channel and at least one liquid cooling channel, the pressure relief channel is in communication with the explosion-proof valve via the cavity of the frame, and the liquid cooling channel is in communication with the liquid cooling flow channel of the liquid cooling plate. By means of this structural design, structures such as a bottom guard plate, a cell tray and a pressure relief channel of traditional battery module can be integrated on the bottom support plate structure. By means of the design method of an integrated structure, the arrangement of a thin bottom guard plate and the sealing design between the bottom guard plate and a cell tray can be avoided. The structure design is simple and reasonable, the installation process is simple and convenient, the production costs can be significantly reduced, and the overall structural strength of the bottom support plate structure and the sealing performance of the pressure relief channel can be improved.

In addition, by eliminating liquid cooling pipeline structure of traditional battery modules, and achieving liquid cooling of the cells through the liquid cooling channel of the bottom support plate structure and the liquid cooling flow channel of the liquid cooling plate, the installation space within the box can be significantly saved. On the basis of realizing pressure relief and liquid cooling functions during the thermal runaway of the battery module, this design further provides design space for liquid cooling devices of other electric components with high-heat generation inside the box, thereby solving the liquid cooling problem of the electrical components with high-heat generation.

### BRIEF DESCRIPTION OF THE DRAWINGS

FIG. 1 is a structural schematic diagram of an integrated battery module of the present disclosure;
FIG. 2 is an exploded diagram of a frame, a bottom support plate structure and a diverter plate of the present disclosure;
FIG. 3 is an enlarged diagram of a partial structure at a region H shown in FIG. 2;
FIG. 4 is an exploded diagram of a liquid cooling assembly of the present disclosure;
FIG. 5 is another structural schematic diagram of an integrated battery module of the present disclosure;
FIG. 6 is an enlarged diagram of a partial structure at a region K shown in FIG. 5.

The meanings of the reference numerals in the drawings are as follows:
1, frame; 11, explosion-proof valve; 12, cross beam; 2, bottom support plate structure; 21, pressure relief channel; 22, liquid cooling channel; 23, mounting hole; 3, liquid cooling assembly; 31, liquid cooling plate; 32, flow collection body; 33, liquid cooling flow channel; 34, water inlet/outlet port; 4, cell; 5, potting adhesive; 6, diverter plate; 7, second water inlet/outlet pipe; 8, BMS assembly; 9, BDU assembly.

### DETAILED DESCRIPTION

In the description of the present disclosure, it should be noted that orientations or positional relationships indicated by terms such as "up", "down", "front", "rear", "left", "right", "vertical", "horizontal", "top", "bottom", "inside", "outside", etc., are based on the orientations or positional relationships shown in the accompanying drawings, and are merely for the convenience of describing the present disclosure and simplifying the description, rather than indicating or implying that the indicated device or element must have a particular orientation, be constructed and operated in a particular orientation, and therefore, it cannot be understood as a limitation on the present disclosure.

In an embodiment, the bottom support plate structure is provided with a plurality of mounting holes on its one side facing the receiving space, where the receiving space is communicated with the pressure relief channel (21) through the mounting holes, and the cells are provided in the mounting holes.

In an embodiment, and the bottom support plate structure are arranged perpendicular to each other, and both sides of the liquid cooling plate are arranged to be attached to an outer peripheral side of the cell.

In an embodiment, a potting adhesive is further provided in the receiving space, and the potting adhesive is arranged between two adjacent cells, between the cells and the liquid cooling plate, as well as between the cells and the frame.

In an embodiment, the integrated battery further includes a cover plate fixedly mounted on one side of the frame away from the bottom support plate structure, so that the receiving space is formed among the frame, the bottom support plate structure and the cover plate.

In an embodiment, on the basis of the above embodiments, a technical solution for a specific structural arrangement of the liquid cooling assembly, a diverter plate and a water inlet/outlet pipe is provided.

In the technical solution of this embodiment, the number of the liquid cooling plates is greater than or equal to two. The liquid cooling plate is continuously bent along a horizontal extension direction of the liquid cooling plate to form a plurality of arc-shaped segments.

In an embodiment, the liquid cooling assembly further includes a flow collection body, where the flow collection body is internally provided with a flow collection chamber. A plurality of liquid cooling flow channels inside the liquid cooling plate are sequentially communicated, and the liquid cooling flow channel is communicated with the liquid cooling channel through the flow collection chamber.

In an embodiment, the integrated battery module further includes a diverter plate and a water inlet/outlet pipe, where the diverter plate (6) is internally provided with a water inlet chamber and a water outlet chamber separated from each other; the water inlet/outlet pipe includes a water inlet pipe and a water outlet pipe, the water inlet pipe is in communication with the liquid cooling channel via the water inlet chamber, and the water outlet pipe is in communication with the liquid cooling channel via the water outlet chamber.

In an embodiment, on the basis of the above embodiments, a technical solution for a specific structural arrangement of a BMS assembly, a BDU assembly and a cross beam is provided.

In the technical solution of this embodiment, the integrated battery module further includes a BMS assembly and a BDU assembly, where both the BMS assembly and the BDU assembly are disposed in the receiving space.

In an embodiment, a cross beam is fixedly connected inside the frame; where the liquid cooling plate is fixedly mounted on the cross beam; the cells, the liquid cooling assembly, the BMS assembly, and the BDU assembly are respectively arranged at two sides of the cross beam.

### Embodiment 1

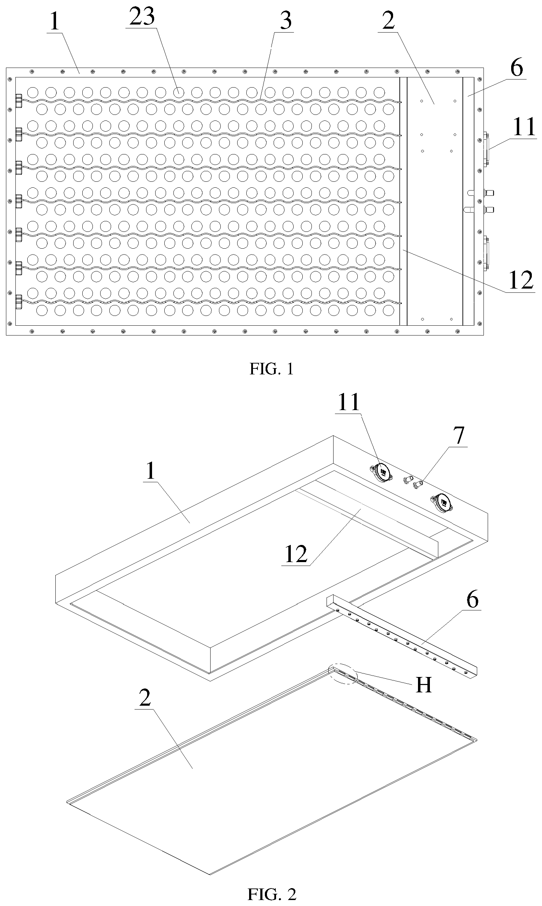

Referring to FIGs. 1 and 2, according to a first embodiment of the present disclosure, an integrated battery module includes a box. The box includes a frame 1 and a bottom support plate structure 2. The bottom support plate structure 2 is fixedly mounted on one side of the frame 1. The frame 1 is provided with an explosion-proof valve 11 on its outer peripheral side. The frame 1 is internally provided with a cavity communicating with the explosion-proof valve 11. The frame 1 is of a rectangular frame structure. The bottom support plate structure 2 may be fixedly mounted on the one side of the frame 1 by welding pipes or other processes.

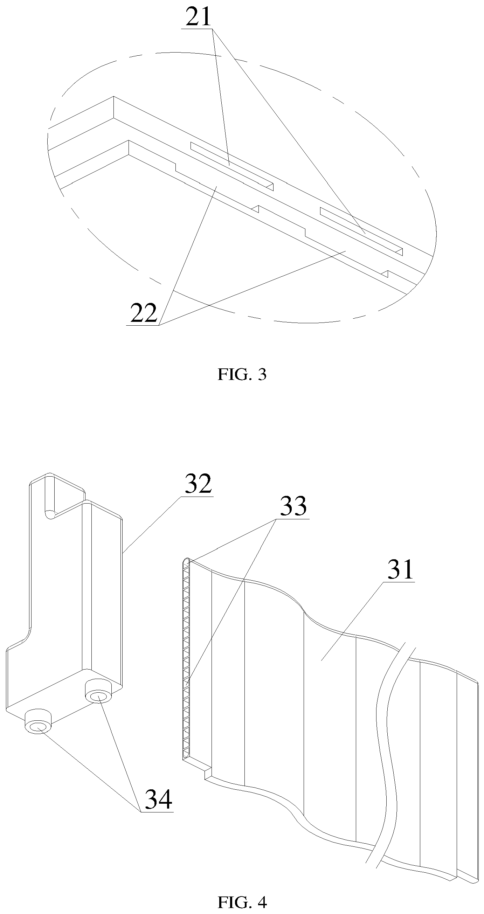

Referring to FIG. 3, the bottom support plate structure 2 is provided with at least one pressure relief channel 21 and at least one liquid cooling channel 22. The pressure relief channel 21 is in communication with the explosion-proof valve 11 through the cavity within the frame 1. The bottom support plate structure 2 may preferably be an aluminum extrusion profile structure, eliminating the need for stamping or die-casting mold processes on traditional cell trays. This design offers high structural strength, and a simple and convenient manufacturing process. In addition, in the present disclosure, the pressure relief channel 21 and the liquid cooling channel 22 are formed on the bottom support plate structure 2 by means of external tooling. Specifically, the pressure relief channel 21 within the bottom support plate structure 2 is configured to discharge flames and combustible gases generated during thermal runaway occurring in the battery module through the explosion-proof valve 11 of the frame 1, thereby eliminating the need for the bottom guard plate and the cell tray of traditional battery modules, as well as the sealing design between the two to achieve pressure relief functionality. The liquid cooling channel 22 within the bottom support plate structure 2 is configured to provide a flow path for cooling water to form a liquid cooling system, thereby eliminating the need for the liquid cooling pipeline structure in traditional battery modules and saving installation space in the box.

Referring to FIGs. 1 and 4, the integrated battery module further includes a liquid cooling assembly 3. The liquid cooling assembly 3 includes a liquid cooling plate 31. The frame 1 and the bottom support plate structure 2 cooperate to form a receiving space. The liquid cooling plate 31 is arranged in the receiving space. The liquid cooling plate 31 is internally provided with at least one liquid cooling flow channel 33. The liquid cooling flow channel 33 is in communication with the liquid cooling channel 22. The liquid cooling channel 22 within the bottom support plate structure 2 and the liquid cooling flow channel 33 within the liquid cooling plate 31 combine to form a liquid cooling circulation system when cooling water is introduced, which can eliminate the need to arrange a traditional liquid cooling pipeline structure within the receiving space, thereby saving installation space in the box.

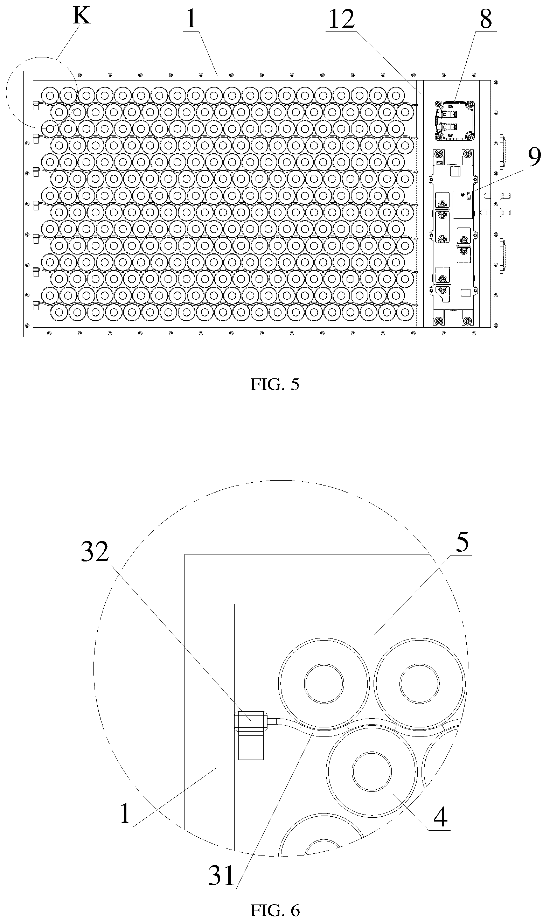

Referring to FIGs. 4 and 5, the integrated battery module further includes cells 4, and the number of the cells 4 is multiple. The plurality of cells 4 are arranged at intervals in the receiving space enclosed by the frame 1 and the bottom support plate structure 2. Specifically, the cells 4 are mounted on the bottom support plate structure 2, that is, the bottom support plate structure 2 serves as structural support for the cells 4, has high structural strength, can withstand significant external forces during use, and meets test requirements such as compression, ball impact or stone impact.

In the technical solution of this embodiment, the present disclosure provides structural support for the cells 4 through the overall structure of the bottom support plate structure 2, realizes a pressure relief function during thermal runaway of the battery module through the pressure relief channel 21, and realizes a liquid cooling function for the cells 4 through the liquid cooling channel 22 and the liquid cooling flow channel 33 of the liquid cooling plate 31, thereby integrating the structures such as a bottom guard plate, a cell tray, a liquid cooling pipeline, and a pressure relief channel of traditional battery modules on the bottom support plate structure 2. Therefore, the present disclosure can avoid providing a thin bottom guard plate within the box, making a sealing design between the bottom guard plate and the cell tray, as well as providing a complex arrangement of liquid cooling pipelines within the box. This structure design is simple and reasonable, the installation process is simple, and the production costs can be significantly reduced. In addition, the overall structure strength of the bottom support plate structure 2 is high, the sealing performance of the pressure relief channel 21 is good, and the liquid cooling effect of the liquid cooling system is good.

More specifically, by eliminating the liquid cooling pipeline structure of the traditional battery modules, the present disclosure can significantly save installation space in the box, and on the basis of realizing pressure relief and liquid cooling functions during thermal runaway of the battery module, it further provides design space for liquid cooling devices of other electrical components with high-heat generation inside the box, thereby solving the liquid cooling problems of the electrical components with high-heat generation.

Referring to FIGs. 1 and 5, in an optional solution of the embodiment, the bottom support plate structure 2 is provided with a plurality of mounting holes 23 on its one side facing the receiving space. The receiving space is in communication with the pressure relief channel 21 through the mounting holes 23, and the cells 4 are arranged in the mounting holes 23. The plurality of mounting holes 23 are arranged at intervals on the bottom support plate structure 2. After the cells 4 are arranged in the mounting holes 23, the cells 4 can be arranged side by side and at intervals in the receiving space. More specifically, when thermal runaway occurs in the battery module, the generated flames and combustible gases enter the pressure relief channel 21 through the mounting hole 23, then enter the cavity within the frame 1 under the guidance of the pressure relief channel 21, and finally are discharged through the explosion-proof valve 11 on the frame 1, thereby achieving a pressure relief function and improving the safety performance of the battery module.

Referring to FIGs. 1 and 6, in another optional solution of this embodiment, the liquid cooling plate 31 and the bottom support plate structure 2 are arranged perpendicular to each other, and both sides of the liquid cooling plate 31 are arranged to be attached to an outer peripheral side of the cell 4. The liquid cooling plate 31 and the bottom support plate structure 2 being arranged perpendicular to each other can provide a mounting space for the cells 4 within the receiving space, ensuring that the arrangement of the liquid cooling plate 31 in the receiving space does not affect the mounting space of the plurality of cells 4 inside the box, and after the cells 4 are placed in the mounting holes 23 along a vertical direction, both sides of the liquid cooling plate 31 can be attached to the outer peripheral sides of the cells 4. More specifically, because the liquid cooling plate 31 is closely attached to the outer peripheral sides of the cells 4, after cooling water is introduced into the liquid cooling flow channel 33 of the liquid cooling plate 31, heat exchange with the cells 4 may be completed, thereby achieving a liquid cooling effect on the cells 4.

Referring to FIGs. 5 and 6, in a preferable solution of this embodiment, the receiving space of the box is further provided with potting adhesive 5, and the potting adhesive 5 is arranged between two adjacent cells 4, between the cells 4 and the liquid cooling plate 31, as well as between the cells 4 and the frame 1. During specific assembly, the pressure relief channel 21 and the liquid cooling channel 22 are first formed on the bottom support plate structure 2 by means of processing tools, then the bottom support plate structure 2 is fixedly mounted on one side of the frame 1 by means of a process such as welding, and then the assemble of the liquid cooling assembly 3 and the cells 4 are completed, finally, liquid potting adhesive 5 is poured into the receiving space enclosed by the frame 1 and the bottom support plate structure 2. The potting adhesive 5 flows into gaps between two adjacent cells 4, gapes between the cells 4 and the liquid cooling plates 31, and gapes between the cells 4 and the frame 1. After the potting adhesive 5 is solidified, the liquid cooling assembly 3, the cells 4 and other components inside the box can be fixed. This structure design is simple and reasonable. More specifically, the potting adhesive 5 described in the present disclosure may preferably be a polyurethane material or an epoxy resin material.

In another embodiment, the integrated battery further includes a cover plate (not shown in the figure), which is fixedly mounted on one side of the frame 1 away from the bottom support plate structure 2, so that the receiving space is formed among the frame 1, the bottom support plate structure 2 and the cover plate. Specifically, after the potting adhesive 5 is poured inside the box and cooled and solidified, the cover plate is fixedly mounted on one side of the frame 1 away from the bottom support plate structure 2 by welding or screws, bolts, screw connections, etc., so that the box of the present disclosure forms a square closed structure, and the receiving space formed inside the box is configured to arrange the cells 4, the liquid cooling assembly 3 and other electrical components or liquid cooling assemblies.

### Embodiment 2

In a second embodiment of the present disclosure, on the basis of the first embodiment, a technical solution for a specific structure arrangement of the liquid cooling assembly 3, a diverter plate 6 and a water inlet/outlet pipe 7 is provided.

Referring to FIG. 4, in the technical solution of this embodiment, the number of the liquid cooling plates 31 is greater than or equal to two (i.e. a plurality of liquid cooling plates are provided), and the liquid cooling plate 31 is continuously bent along a horizontal extension direction of the liquid cooling plates 31, to form a plurality of arc-shaped segments, so that the liquid cooling plate 31 as a whole has a serpentine structure or a U-shaped structure. The liquid cooling plates 31 are arranged at intervals in a horizontal direction, and are preferably arranged parallel to each other. Specifically, the liquid cooling plate 31 is continuously bent to form arc segments, on the one hand, the arc sections and the outer peripheral sides of the cells 4 can be more closely fitted, increasing the contact heat exchange area between the liquid cooling plate 31 and the cells 4, thereby improving the liquid cooling effect on the cells 4, and on the other hand, the liquid cooling plate 31 may also provide a double-sided cooling effect on the cells 4 located at both sides of the liquid cooling plate 31, thereby reducing the temperature difference between the cells 4 at both sides of the liquid cooling plate 31, and improving the temperature consistency of the plurality of cells 4.

Referring to FIGs. 1 and 4, in an optional solution of this embodiment, the liquid cooling assembly 3 further includes a flow collection body 32. The flow collection body 32 is internally provided with a flow collection chamber. The plurality of liquid cooling flow channels 33 within the liquid cooling plate 31 are sequentially communicated, and the liquid cooling flow channel 33 is in communication with the liquid cooling channel 22 through the flow collection chamber. The liquid cooling channel 22 within the bottom support plate structure 2, the flow collection chamber within the flow collection body 32, and the liquid cooling flow channels 33 within the liquid cooling plate 31 are combined to form a liquid cooling circulation system. By arranging the flow collection body 32 between the bottom support plate structure 2 and the liquid cooling plate 31 of the liquid cooling circulation system, the cooling water in the plurality of liquid cooling flow channels 33 can be gathered and flow into the liquid cooling channels 22 through the flow collection chamber, and the cooling water in the liquid cooling channel 22 can be dispersedly introduced into the plurality of liquid cooling channels 33 through the flow collection chamber. More specifically, one side of the flow collection body 32 facing the bottom support plate structure 2 is provided with a water inlet/outlet port 34. The water inlet/outlet port 34 includes a water inlet port and a water outlet port. The cooling water in the liquid cooling channel 22 enters the flow collection chamber through the water inlet port and then enters the liquid cooling flow channels 33. After the cooling water in the liquid cooling flow channels 33 completes heat exchange, it enters the flow collection chamber through the water outlet port and then enters the liquid cooling channel 22, thereby forming a liquid cooling circulation to achieve the effect of liquid cooling and temperature reduction for the cells 4.

As shown in FIGs. 2 and 5, in another optional solution of this embodiment, the integrated battery module further includes a diverter plate 6 and a water inlet/outlet pipe 7. The diverter plate 6 is internally provided with a water inlet chamber and a water outlet chamber separated from each other. The water inlet/outlet pipe 7 includes a water inlet pipe and a water outlet pipe. The water inlet pipe is in communication with the liquid cooling channel 22 via the water inlet chamber, and the water outlet pipe is in communication with the liquid cooling channel 22 via the water outlet chamber. The water inlet chamber and the water outlet chamber within the diverter plate 6, the water inlet/outlet pipe 7 and the liquid cooling channel 22 within the bottom support plate structure 2 are combined to form a liquid cooling circulation system. Specifically, since a plurality of liquid cooling channels 22 are provided inside the bottom support plate structure 2, if a corresponding number of the water inlet /outlet pipes 7 are provided according to the liquid cooling channels 22, it would greatly increase material costs and occupy more of the internal installation space within the box. Therefore, in the present disclosure, by arranging the diverter plate 6 between the water inlet/outlet pipe 7 and the bottom support plate structure 2, and by connecting the water inlet/outlet pipe 7 to external pipelines, external cooling water can be uniformly introduced into the diverter plate 6 via the water inlet pipe and then distributed to each liquid cooling flow channel 22 via the water inlet chamber of the diverter plate 6. After the cooling water in each liquid cooling flow channel 22 completes the liquid cooling circulation, it enters the water outlet pipe through the water outlet chamber of the flow dividing platediverter plate 6, and finally flows out from the water outlet pipe, forming a liquid cooling circulation. This structural design is simple and reasonable, and can significantly reduce the production costs.

### Embodiment 3

In a third embodiment of the present disclosure, on the basis of the first embodiment, a technical solution for a specific structural arrangement of a BMS assembly 8, a BDU assembly 9 and a cross beam 6 is provided.

As shown in FIG. 5, in the technical solution of this embodiment, the integrated battery module further includes a BMS assembly 8 and a BDU assembly 9. The BMS assembly 8 and the BDU assembly 9 are both arranged in the receiving space. The BMS assembly 8 and the BDU assembly 9 are both liquid cooling devices for high-heat electrical components arranged within the box. By means of the structural design of the bottom support plate structure 2 and the liquid cooling assembly 3 of the present disclosure, installation space can be provided within the receiving space for the BMS assembly 8 and the BDU assembly 9, thereby solving the liquid cooling problems of high-heat electrical components.

Referring to FIGs. 2 and 5, in a preferred solution of this embodiment, the cross beam 12 is fixedly connected inside the frame 1, and the liquid cooling plate 31 is fixedly mounted on the cross beam 12, thereby realizing assembly and connection of the liquid cooling assembly 3 within the box. In an embodiment, the cells 4, the liquid cooling assembly 3, the BMS assembly 8, and the BDU assembly 9 are respectively arranged at two sides of the cross beam 12, that is, the cells 4 and the liquid cooling assembly 3 are arranged at one side of the cross beam 12, while the BMS assembly 8 and the BDU assembly 9 are arranged at the other side of the cross beam 12. Specifically, the cross beam 12 can provide structural support for the liquid cooling assembly 3 on the one hand, and can also separate the receiving space where the cells 4 and the liquid cooling assembly 3 are located from the receiving space where the BMS assembly 8 and the BDU assembly 9 are located on the other hand, thereby ensuring that the potting adhesive 5 will not flow into the areas of the BMS assembly 8 and the BDU assembly 9 when the potting adhesive 5 is poured into the box, thereby avoiding damage to the BMS module 8 and the BDU module 9.

More specifically, the BMS (Battery Management System) component 8 described in the present disclosure is a battery management system component, which functions to intelligently manage and maintain various units in a battery, so as to prevent the battery from being overcharged or over-discharged, thereby prolonging the service life of the battery and monitoring the battery. The BDU (Battery energy Distribution Unit) assembly 9 described in the present disclosure is a battery energy distribution unit assembly, which is an important component on a high-voltage loop of an electric vehicle, and controls a power-on/power-off process, a pre-charging process and a charging process of the high-voltage electric loop, and has an important impact on the service life, a control strategy and high-voltage electric safety of the electric vehicle.

In summary, in the integrated battery module provided by the present disclosure, the bottom support plate structure 2 is arranged on one side of the frame 1, the bottom support plate structure 2 is provided with at least one pressure relief channel 21 and at least one liquid cooling channel 22, the pressure relief channel 21 is in communication with the explosion-proof valve 11 via the cavity of the frame 1, and the liquid cooling channel 22 is in communication with the liquid cooling flow channel 33 of the liquid cooling plate 31. By means of this structural design, structures such as a bottom guard plate, a cell tray and a pressure relief channel of traditional battery modules can be integrated on the bottom support plate structure 2. By means of the design method of an integrated structure, the arrangement of a thin bottom guard plate and the sealing design between the bottom guard plate and a cell tray can be avoided. The structure design is simple and reasonable, the installation process is simple and convenient, the production costs can be significantly reduced, and the overall structural strength of the bottom support plate structure 2 and the sealing performance of the pressure relief channel 21 can be improved. In addition, by eliminating liquid cooling pipeline structure of traditional battery modules, and achieving liquid cooling of the cells 4 through the liquid cooling channel 22 of the bottom support plate structure 2 and the liquid cooling flow channel 33 of the liquid cooling plate 31, the installation space within the box can be significantly saved. On the basis of realizing pressure relief and liquid cooling functions during thermal runaway of the battery module, this design further provides design space for liquid cooling devices of other electric components with high-heat generation inside the box, thereby solving the liquid cooling problem of the electrical components with high-heat generation.

## Claims

1. An integrated battery module, comprising:
a box comprising a frame (1) and a bottom support plate structure (2), wherein the bottom support plate structure (2) is fixedly mounted on one side of the frame (1); the frame (1) is provided with an explosion-proof valve (11) on its outer peripheral side; the frame (1) is internally provided with a cavity communicating with the explosion-proof valve (11); the bottom support plate structure (2) is provided with at least one pressure relief channel (21) and at least one liquid cooling channel (22), wherein the pressure relief channel (21) is in communication with the explosion-proof valve (11) through the cavity;
a liquid cooling assembly (3) comprising a liquid cooling plate (31), wherein the liquid cooling plate (31) is arranged in an receiving space enclosed by the frame (1) and the bottom supporting plate structure (2); the liquid cooling plate (31) is internally provided with at least one liquid cooling flow channel (33), wherein the liquid cooling flow channel (33) is in communication with the liquid cooling channel (22); and
cells (4), wherein the number of the cells (4) is multiple, and the plurality of cells (4) are arranged at intervals in the receiving space.

2. The integrated battery module according to claim 1, wherein the bottom support plate structure (2) is provided with a plurality of mounting holes (23) on its one side facing the receiving space, wherein the receiving space is in communication with the pressure relief channel (21) through the mounting holes (23); the cells (4) are arranged in the mounting holes (23).

3. The integrated battery module according to claim 1, wherein the liquid cooling plate (31) and the bottom support plate structure (2) are arranged perpendicular to each other, and both sides of the liquid cooling plate (31) are arranged to be attached to an outer peripheral side of the cell (4).

4. The integrated battery module according to claim 2 or 3, wherein a potting adhesive (5) is further provided in the receiving space, and the potting adhesive (5) is arranged between two adjacent cells (4), between the cells (4) and the liquid cooling plate (31), as well as between the cells (4) and the frame (1).

5. The integrated battery module according to claim 4, further comprising a cover plate, wherein the cover plate is fixedly mounted on one side of the frame (1) away from the bottom supporting plate structure (2), so that the receiving space is formed among the frame (1), the bottom supporting plate structure (2) and the cover plate.

6. The integrated battery module according to claim 1, wherein the number of the liquid cooling plates (31) is greater than or equal to two; wherein the liquid cooling plate (31) is continuously bent along a horizontal extension direction of the liquid cooling plate (31), to form a plurality of arc-shaped segments.

7. The integrated battery module according to claim 6, wherein the liquid cooling assembly (3) further comprises a flow collection body (32), wherein the flow collection body (32) is internally provided with a flow collection chamber; a plurality of liquid cooling flow channels (33) within the liquid cooling plate (31) are sequentially communicated, and the liquid cooling flow channel (33) is in communication with the liquid cooling channel (22) through the flow collection chamber.

8. The integrated battery module according to claim 6, further comprising a diverter plate (6) and a water inlet/outlet pipe (7), wherein the diverter plate (6) is internally provided with a water inlet chamber and a water outlet chamber separated from each other; the water inlet/outlet pipe (7) comprises a water inlet pipe and a water outlet pipe, wherein the water inlet pipe communicates with the liquid cooling channel (22) via the water inlet chamber, and the water outlet pipe communicates with the liquid cooling channel (22) via the water outlet chamber.

9. The integrated battery module according to claim 1, further comprising a BMS assembly (8) and a BDU assembly (9), wherein both the BMS assembly (8) and the BDU assembly (9) are arranged in the receiving space.
The integrated battery module according to claim 9, wherein a cross beam (12) is fixedly connected inside the frame (1); wherein the liquid cooling plate (31) is fixedly mounted on the cross beam (12); the cells (4), the liquid cooling assembly (3), the BMS assembly (8) and the BDU assembly (9) are respectively arranged at two sides of the cross beam (12).
